# EUROPEAN PATENT APPLICATION

(11) **EP 4 008 184 A1**
(43) Date of publication of application: **08.06.2022**
(21) Application number: 21211902.8
(22) Date of filing: 02.12.2021
(51) Int. Cl.: A01N 33/12, A01N 25/10, A01P 1/00

(54) **ANTIMICROBIAL COMPOSITION COMPRISING MALEIC ACID/VINYL ETHER COPOLYMER**

(30) Priority: 04.12.2020 EP 20211914
(71) Applicant: The Procter & Gamble Company, Cincinnati, OH 45202 (US)
(72) Inventor: HAYWARD, Adam Simon, Newcastle upon Tyne, NE12 9TS (GB); PEREZ-PRAT VINUESA, Eva Maria, 2405 Louveira (Sao Paulo), CEP 13290-000 (BR); MORALES GARCIA, ANA L., Newcastle-upon-Tyne, NE12 9TS (GB); STOICA, Olena Maria, Newcastle-upon-Tyne, NE12 9TS (GB); FONG, Rebecca Jane, Newcastle upon Tyne, NE12 9TS (GB)
(74) Representative: P&G Patent Belgium UK

(57) **Abstract**

An aqueous antimicrobial cleaning composition comprising; from about 0.05% to about 2% by weight of the composition of a quaternary ammonium biocidal compound; from about 0.1% to about 4% by weight of the composition of a polymer comprising a maleic acid-co-alkyl vinyl ether monomers; from about 0.05% to about 5% by weight of the composition of a surfactant; from about 0% to about 3% by weight of the composition of a pH adjusting agent; and at least 80% by weight of the composition of water.

## Description

### FIELD OF THE INVENTION

The present invention is in the field of antimicrobial compositions, in particular the field of antimicrobial cleaning compositions. The composition provides residual biocidal properties.

### BACKGROUND OF THE INVENTION

Compositions such as those described in WO 2016/086012 A1 provide long lasting disinfectant benefits. Antimicrobial compositions can include bulky and heavily charged molecules, such as quaternary ammonium compounds and polymers. Quaternary ammonium compounds are used to provide antimicrobial efficacy and polymers are often used to provide a desirable surface finish. These molecules tend to interact and coalesce, especially when having opposite charges, making very difficult to formulate stable composition containing these oppositely charged compounds.

Surfaces treated with existing antimicrobial compositions can be left with a poor shine profile, a low drying rate and a sticky/tacky feel that connotes lack of cleanliness to the user.

Therefore, a need remains for an antimicrobial cleaning composition that is stable. It is desirable that the composition provides long lasting disinfection. It is also desirable that the composition provides good shine and lack of stickiness on the treated surface.

### SUMMARY OF THE INVENTION

According to the first aspect of the present invention, there is provided an antimicrobial cleaning composition. The composition is stable on storage. The composition provides good cleaning and preferably good shine and it does not leave the treated surface streaky or tacky. Preferably the composition provides residual biocidal properties to the treated surface.

According to the second aspect of the invention there is provided a method of treating a surface with the composition of the invention to provide residual biocidal properties to the surface.

According to the third aspect of the invention there is provided the use of the composition of the invention to provide residual biocidal properties to a surface, in particular to a hard surface.

The elements of the composition of the invention described in relation to the first aspect of the invention apply *mutatis mutandis* to the other aspects of the invention.

### DETAILED DESCRIPTION OF THE INVENTION

All percentages, ratios and proportions used herein are by weight percent of the composition, unless otherwise specified. All average values are calculated "by weight" of the composition, unless otherwise expressly indicated. All ratios are calculated as a weight/weight level, unless otherwise specified.

All measurements are performed at 25°C unless otherwise specified.

Unless otherwise noted, all component or composition levels are in reference to the active portion of that component or composition, and are exclusive of impurities, for example, residual solvents or by-products, which may be present in commercially available sources of such components or compositions.

As used herein, the terms "microbe" or "microbial" should be interpreted to refer to any of the microscopic organisms studied by microbiologists or found in the use environment of a treated article. Such organisms include, but are not limited to, bacteria and fungi as well as other single-celled organisms such as mould, mildew and algae. Viral particles and other infectious agents are also included in the term microbe.

"Antimicrobial" further should be understood to encompass both microbicidal and microbiostatic properties. That is, the term comprehends microbe killing, leading to a reduction in number of microbes, as well as a retarding effect of microbial growth, wherein numbers may remain more or less constant (but nonetheless allowing for slight increase/ decrease).

For ease of discussion, this description uses the term antimicrobial to denote a broad-spectrum activity (e.g. against bacteria, viruses and fungi). When speaking of efficacy against a particular microorganism or taxonomic rank, the more focused term will be used (e.g. antifungal to denote efficacy against fungal growth in particular). Using the above example, it should be understood that efficacy against fungi does not in any way preclude the possibility that the same antimicrobial composition may demonstrate efficacy against another class of microbes.

Residual biocidal properties refer to achieving at least 99.9% microbial reduction in the Environmental Protection Agency (EPA)-approved 24 hour Residual Self Sanitizing (RSS) test methodology for dried product residues on hard, non-porous surfaces (EPA#01-1A). That is, the compositions of the invention displaying residual biocidal properties are able to deliver at least 99.9% microbial reduction after a 12-abrasion and 5- reinoculation 24 hour testing regime.

### Antimicrobial composition

The present invention is directed to an antimicrobial composition. The composition comprises:
i) from about 0.05% to about 2% by weight of the composition of a quaternary ammonium biocidal compound;
ii) from about 0.1% to about 4% by weight of the composition of a polymer comprising maleic acid-co-alkyl vinyl ether monomers, i.e., the polymer is a copolymer of maleic acid and alkyl vinyl ether;
iii) from about 0.05% to about 5% by weight of the composition of a surfactant, preferably selected from the group consisting of an amine oxide surfactant, a non-ionic surfactant and mixtures thereof.
iv) from about 0% to about 3% by weight of the composition of a pH adjusting agent; and
v) at least 80% by weight of the composition of water.

The composition can further comprise a pH adjusting agent and/or a fragrance, among other components. The composition is an aqueous solution, preferably the composition comprises more than 80%, more preferably more than 85% and especially from 86 to 99% by weight of the composition of water.

The composition is formulated to provide antimicrobial and residual biocidal properties for at least 24 hours, via delivering at least 99.9% microbial reduction in the EPA-approved 24 hour RSS test method (EPA #01-1A) The composition can be applied to a surface by spraying, rolling, fogging, wiping or other means. Preferably, the composition is applied to the surface and left to dry. The composition acts as a surface sanitizer, killing infectious microbes present on the surface for at least 24 hours.

Once dried, the liquid formulation leaves a residual protective film on the surface. The residual film possesses a biocidal property, enabling it to maintain protection of the surface against microbial contamination for an extended time period after its application.

The antimicrobial composition imparts a film with the capacity to quickly kill bacteria and other germs for at least 24 hours after deposition of the film on the treated surface. Quick kill generally refers to a time period of about 30 seconds to about 5 minutes. The film will remain on the surface and is durable to multiple touches and wearing of the surface. After the composition is applied to a surface the surface presents a good shine profile.

### Quaternary ammonium biocidal compound

Preferred quaternary ammonium compound (QAC) includes QAC with the following molecular structure: 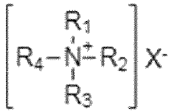 wherein:
R1, R-2, R 3, and R4 are independently selected and include, but are not limited to, alkyl, alkoxy, or aryl, either with or without heteroatoms, or saturated or non-saturated. Some or all of the functional groups may be the same.

The corresponding anion X" includes, but is not limited to, a halogen, sulfonate, sulfate, phosphonate, phosphate, carbonate/bicarbonate, hydroxy, or carboxylate.

QACs include, but are not limited to, n-alkyl dimethyl benzyl ammonium chloride, di-n-octyl dimethyl ammonium chloride, dodecyl dimethyl ammonium chloride, di-n-decyl dimethyl ammonium chloride, N-octyl decyl dimethyl ammonium chloride, n-alkyl dimethyl benzyl ammonium saccharinate, and 3-(trimethoxysilyl) propyldimethyloctadecyl ammonium chloride.

Combinations of monomeric QACs are preferred to be used for the composition of the invention. A specific example of QAC combination is N-alkyl dimethyl benzyl ammonium chloride (40%); N-octyl decyl dimethyl ammonium chloride (30%); di-n-decyl dimethyl ammonium chloride (15%); and di-n-octyl dimethyl ammonium chloride (15%). The percentage is the weight percentage of individual QAC based on the total weight of blended QACs composition. Examples of commercially available quaternary ammonium compounds include, but are not limited to, Bardac 205M and 208M from Lonza, and BTC885 from Stepan Company. The composition comprises from about 0.05% to about 2%, preferably from 0.1% to 1% by weight of the composition of QAC.

### Polymer

The composition comprises from about 0.1% to about 4% preferably from about 0.5% to about 2% by weight of the composition of the polymer. More preferably from about 0.6% to about 1.5% by weight of the composition of the polymer. The polymer is a copolymer of maleic acid and alkyl vinyl ether. The alkyl group is preferably selected from C1 to C20 alkyl, more preferably C1 to C14 alkyl, more preferably C1 to C6 alkyl, most preferably C1 alkyl (i.e., methyl).

Preferably, the polymer is a linear copolymer. The copolymer has repeating units of methyl vinyl ether and maleic acid. The repeating units of the polymer of the invention are represented by the formula below: 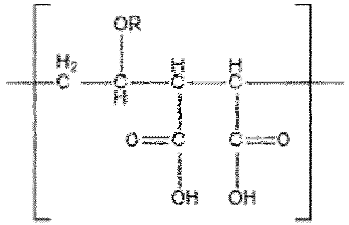 wherein R is an alkyl, preferably methyl as depicted by the formula below:

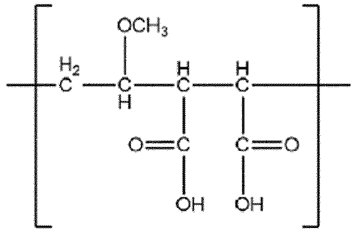

To synthesize the suitable polymer for this invention, methyl vinyl ether and maleic anhydride are reacted to form a copolymer of methyl vinyl ether and maleic anhydride. This copolymer of methyl vinyl ether and maleic anhydride can then be hydrolyzed to create the copolymer of methyl vinyl ether and maleic acid (the dicarboxylic form). Depending on the pH of the aqueous antimicrobial cleaning composition, both carboxylic acid groups of the maleic acid structure units within the polymer may independently exist as acid, salt, or mixture thereof. The polymer in accordance with the invention preferably have a mean molecular weight (weight average molecular weight, Mw), measured by aqueous gel permeation chromatography (GPC) with light scattering detection (SEC-MALLS), in the range of 50000 Da to 2000000 Da, preferably 50000 Da to 1500000 Da, more preferably 150000 Da to 1500000 Da. Such polymers are available commercially from Ashland, such as Gantrez S-95 (∼150000 Da), Gantrez S-96 BF (~700000 Da) and Gantrez S-97 BF (~1200000 Da).The polymers in accordance with the invention are water-soluble, i.e., at least 0.1 g of the polymer is soluble in 100 ml water at 20° C. The polymers are ampholytic, i.e., the polymers have both acid and basic hydrophilic groups and show acidic or basic behaviour depending on the conditions.

### Surfactant

The composition of the invention comprises from 0.05 to 5%, preferably from 0.05 to 4% by weight of the composition of surfactant. The surfactant contributes to cleaning and spreading of the composition on the surface to be cleaned.

### Non-ionic surfactants

The composition of the invention preferably comprises from 0.05 to 5%, more preferably from 0.05 to 4% by weight of the composition of non-ionic surfactant. Preferably the non-ionic surfactant is an alcohol alkoxylate surfactant.

### Alcohol alkoxylate non-ionic surfactants

Suitable alcohol alkoxylate non-ionic surfactants are according to the formula RO-(A)nH, wherein: R is a primary C4 to C18, preferably a C6 to C16, more preferably a C6 to C14 branched or linear alkyl chain, or a C6 to C28 alkyl benzene chain; A is an ethoxy or propoxy or butoxy unit, or mixtures thereof, and wherein n is from 1 to 30, preferably from 1 to 15, more preferably from 3 to 12 even more preferably from 3 to 8. Preferred R chains for use herein are the C6 to C16 linear or branched alkyl chains.

Suitable branched alkoxylated alcohol may be selected from the group consisting of: C4-C10 alkyl branched alkoxylated alcohols, and mixtures thereof. The branched alkoxylated alcohol can be derived from the alkoxylation of C4-C10 alkyl branched alcohols selected form the group consisting of: C4-C10 primary mono-alcohols having one or more C1-C4 branching groups.

By C4-C10 primary mono-alcohol, it is meant that the main chain of the primary mono-alcohol has a total of from 4 to 10 carbon atoms. The C4-C10 primary mono-alcohol can be selected from the group consisting of: methyl butanol, ethyl butanol, methyl pentanol, ethyl pentanol, methyl hexanol, ethyl hexanol, propyl hexanol, dimethyl hexanol, trimethyl hexanol, methyl heptanol, ethyl heptanol, propyl heptanol, dimethyl heptanol, trimethyl heptanol, methyl octanol, ethyl octanol, propyl octanol, butyl octanol, dimethyl octanol, trimethyl octanol, methyl nonanol, ethyl nonanol, propyl nonanol, butyl nonanol, dimethyl nonanol, trimethyl nonanol and mixtures thereof.

The C4-C10 primary mono-alcohol can be selected from the group consisting of: ethyl hexanol, propyl hexanol, ethyl heptanol, propyl heptanol, ethyl octanol, propyl octanol, butyl octanol, ethyl nonanol, propyl nonanol, butyl nonanol, and mixtures thereof.

Preferably the C4-C10 primary mono-alcohol is selected from the group consisting of: ethyl hexanol, propyl hexanol, ethyl heptanol, propyl heptanol, and mixtures thereof.

The C4-C10 primary mono-alcohol is most preferably ethyl hexanol, and propyl heptanol. In the branched alkoxylated alcohol, the one or more C1-C4 branching group can be substituted into the C4-C10 primary mono-alcohol at a C1 to C3 position, preferably at the C1 to C2 position, more preferably at the C2 position, as measured from the hydroxyl group of the starting alcohol. The branched alkoxylated alcohol can comprise from 1 to 14, preferably from 2 to 7, more preferably from 4 to 6 ethoxylate units, and optionally from 1 to 9, preferably from 2 to 7, more preferably from 4 to 6 of propoxylate units.

The branched alkoxylated alcohol is preferably 2-ethyl hexan-1-ol ethoxylated to a degree of from 4 to 6, and propoxylated to a degree of from 4 to 6, more preferably, the alcohol is first propoxylated and then ethoxylated. Another preferred branched alkoxylated alcohols are 2-alkyl-1-alkanols such as alkoxylate C10 guerbet alcohols with 1 to 14, preferably from 2 to 7, more preferably from 3 to 6 ethoxylate or ethoxylate-propoxylate units.

Non-limiting examples of suitable branched alkoxylated alcohols are, for instance, Ecosurf^{®} EH3, EH6, and EH9, commercially available from DOW, and Lutensol^{®} XP alkoxylate Guerbet alcohols & Lutensol^{®} XL ethoxylated Guerbet alcohols available from BASF.

Linear alcohol alkoxylate non-ionic surfactants preferred herein are alkoxylated non-ionic surfactants with a C8, C10, C12, mixtures of C8 to C10, mixtures of C10 to C12, mixtures of C9 to C11 linear alkyl chain and 8 or less ethoxylate units, preferably 3 to 8 ethoxylate units.

Non-limiting examples of suitable linear alkoxylated non-ionic surfactants for use herein are Dobanol^{®} 91-2.5 (R is a mixture of C9 and C11 alkyl chains, n is 2.5), Dobanol^{®} 91-5 (R is a mixture of C9 to C11 alkyl chains, n is 5); Dobanol^{®} 91-10 (R is a mixture of C9 to C11 alkyl chains, n is 10); Greenbentine DE60 (R is a C10 linear alkyl chain, n is 6); Marlipal 10-8 (R is a C10 linear alkyl chain, n is 8); Neodol 91-8 (R is a mixture of C9 to C11 alkyl chains, n is 8); Empilan^{®} KBE21 (R is a mixture of C12 and C 14 alkyl chains, n is 21); Lutensol ON30 (R is C10 linear alkyl chain, n is 3); Lutensol ON50 (R is C10 linear alkyl chain, n is 5); Lutensol ON70 (R is C10 linear alkyl chain, n is 7); Novel 610-3.5 (R is mixture of C6 to C10 linear alkyl chains, n is 3.5); Novel 810FD-5 (R is mixture of C8 to C10 linear alkyl chains, n is 5); Novel 10-4 (R is C10 linear alkyl chain, n is 4); Novel 1412-3 (R is mixture of C12 to C14 linear alkyl chains, n is 3); Lialethl^{®} 11-5 (R is a C11 linear alkyl chain, n is 5); Lialethl^{®} 11-21 (R is a mixture of linear and branched C11 alkyl chain, n is 21), or mixtures thereof.

The alkoxylated non-ionic surfactant may be a secondary alcohol ethoxylate such as for example the TergitolTM-15-S surfactants having the general formula shown below and commercially available by DOW

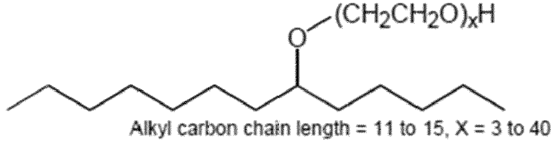

### Tergitol 15-S surfactants

Preferred secondary alcohol ethoxylate surfactants have 3-9 EO units.

Another suitable alkoxylate non-ionic surfactant is an alkyl ethoxy alkoxy alcohol, preferably wherein the alkoxy part of the molecule is propoxy, or butoxy, or propoxy-butoxy. More preferred alkyl ethoxy alkoxy alcohols are of formula (II): 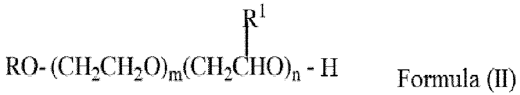 wherein:
R is a branched or unbranched alkyl radical having 8 to 16 carbon atoms;
R1 is a branched or unbranched alkyl radical having 1 to 5 carbon atoms;
n is from 1 to 10; and m is from 6 to 35.

R is preferably from 12 to 15, preferably 13 carbon atoms. R1 is preferably a branched alkyl radical having from 1 to 2 carbon atoms. n is preferably 1 to 5. m is preferably from 8 to 25. Preferably, the weight average molecular weight of the ethoxylated alkoxylated non-ionic surfactant of formula (II) is from 500 to 2000g/mol, more preferably from 600 to 1700 g/mol, most preferably 800 to 1500 g/mol.

The ethoxylated alkoxylated non-ionic surfactant can be a polyoxyalkylene copolymer. The polyoxyalkylene copolymer can be a block-heteric ethoxylated alkoxylate non-ionic surfactant, though block-block surfactants are preferred. Suitable polyoxyalkylene block copolymers include ethylene oxide/propylene oxide block polymers, of formula (III):

(EO)x(PO)y(EO)x

, or

(PO)x(EO)y(PO)x

wherein:
EO represents an ethylene oxide unit, PO represents a propylene oxide unit, and x and y are numbers detailing the average number of moles ethylene oxide and propylene oxide in each mole of product. Such materials tend to have higher molecular weights than most non-ionic surfactants, and as such can range between 1000 and 30000 g/mol, although the molecular weight should be above 2200 and preferably below 13000 to be in accordance with the invention. A preferred range for the molecular weight of the polymeric non-ionic surfactant is from 2400 to 11500 Daltons. BASF (Mount Olive, N.J.) manufactures a suitable set of derivatives and markets them under the Pluronic trademarks. Examples of these are Pluronic (trademark) F77, L62 and F88 which have the molecular weight of 6600, 2450 and 11400 g/mol respectively.

Other suitable ethoxylated alkoxylate non-ionic surfactants are described in Chapter 7 of Surfactant Science and Technology, Third Edition, Wiley Press, ISBN 978-0-471-68024-6.

Most preferably the alkoxylated non-ionic surfactant is selected from the group consisting of: 2-propylheptyl EO8 (Lutensol XL89-BASF); 2-propylheptyl EO5 (Lutensol XL50-BASF); C10 alcohol EO5 (Lutensol ON 50-BASF); C10 -alcohol EO7 (Lutensol ON 70-BASF); C8-C10 EO5 (Novel 810 FD5 Sasol); C10 EO4 (Novel 10-4 Sasol); Tergitol 15-S-3; Tergitol 15-S-5; Tergitol 15-S-7; and Ethyl hexanol PO5EO6 (Ecosurf EH6-Dow).

### Alkyl Polyglucoside non-ionic surfactants

Alkyl polyglycosides are biodegradable non-ionic surfactants which are well known in the art, and can be used in the compositions of the present invention. Suitable alkyl polyglycosides can have the general formula CnH2n+1O(C6H10O5)xH wherein n is preferably from 8 to 16, more preferably 8 to 14, and x is at least 1. Examples of suitable alkyl polyglucoside surfactants are the TRITON^{™} alkyl polyglucosides from Dow; Agnique PG, Disponil APG and Glucopon alkyl polyglucosides from BASF. Preferred alkyl polyglucoside surfactants are those where n is 8 to 12, more preferably 8 to 10, such as for example Triton CG50 (Dow).

### Alkyl glucamide non-ionic surfactants

The composition of the invention may comprise an alkyl glucamide surfactant. Glucamide surfactants are non-ionic surfactants in which the hydrophilic moiety (an amino-sugar derivative) and the hydrophobic moiety (a fatty acid) are linked via amide bonds. This results in a chemical linkage, which is highly stable under alkaline conditions. Particularly preferred alkyl glucamide surfactants are N-alkyl-N-acylglucamides of the formula (I): 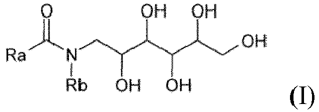 wherein:
Ra is a linear or branched, saturated or unsaturated hydrocarbyl group having 6 to 22 carbon atoms, and Rb is a C1-C4 alkyl radical. Particularly preferably, Rb in formula (I) is a methyl radical. Non-limiting examples of these glucamide surfactants are: N-octanoyl-N-methylglucamide, N-nonanoyl-N-methylglucamide, N-decanoyl-N-methylglucamide, N-dodecanoyl-N-methylglucamide, N-cocoyl-N-methylglucamide, available under the trade name of GlucoPure Foam from Clariant, N-lauroyl/myristoyl-N-methylglucamide, (available under the trade name of GlucoPure Deg from Clariant, and N-octanoyl/decanoyl-N-methylglucamide, available under the trade name of GlucoPure Wet by Clariant.

### Alkyl glucamine surfactants

The compositions of the invention may comprise an amine surfactant selected from amine compounds according to formula (I):

R1-N-(R2)(CH2CHOH(CH2O)nR3) formula (I)

wherein:
R1 and R2 are independently selected from hydrogen, cyclic or acyclic, linear or branched C1 to C10 alkyl, C1 to C10 hydroxyalkyl, polyhydroxyhydrocarbyl and polyalkoxy having the formula (R4-O)xH with R4 being C1-C4 and x is from1 to 15, preferably x is from 1 to 5, more preferably x is 1; n is 0 or 1, preferably 1; and R3 is a C6 to C30 hydrocarbyl, preferably C6 to C30 alkyl, hydroxyalkyl, alkoxyalkyl, cycloalkyl, aralkyl or alkenyl.

A "polyhydroxyhydrocarbyl" is a hydrocarbyl with two or more hydroxyl (-OH) groups. A "hydrocarbyl" is a univalent group formed by removing a hydrogen atom from a hydrocarbon, e.g. ethyl, phenyl.

When R1 is a polyhydroxyhydrocarbyl, R1 is an acyclic or cyclic polyhydroxyhydrocarbyl, preferably a linear polyhydroxyhydrocarbyl. Preferably R1 is a linear C3 to C8 chain with at least two hydroxyl groups, preferably a C4 to C7 chain with at least three hydroxyl groups directly bonded to the carbon atoms of the chain. R1 can include substituents, in particular, alkoxy groups e.g. by etherification of further hydroxyl groups or further polyhydroxyhydrocarbyl, e.g. polyhydroxy alkyl, group(s). R1 preferably includes at least three free hydroxyl groups including such hydroxyl groups on substituents of the basic carbon chain. Alternatively, R1 can be selected from ring structures comprising an internal ether link, the ring comprising at least two or more hydroxyl groups, most preferably the hydroxyl groups are on a carbon atom not connected to the nitrogen in Formula (I). R1 can be an open chain tetratol, pentitol, hexitol or heptitol group or an anhydro e.g. cycloether anhydro derivative of such a group.

R1 can be a polyhydroxyhydrocarbyl derived from a sugar, preferably a sugar selected from the group consisting of: monosaccharide, disaccharide, or trisacchaside, though a monosaccharide is preferred. For instance, R1 can be the residue of, or a residue derived from a sugar, particularly a monosaccharide such as glucose, xylose, fructose or sorbitol; a disaccharide such as maltose or sucrose; or a higher oligosaccharide. While monosaccharides are preferred, disaccharides and trisaccharides can also be present, typically at the ratios present in the sugar from which the polyhydroxyhydrocarbyl is derived. Preferably, R1 is derived from a sugar of the group consisting of glucose, xylose, maltose and mixtures thereof.

Preferred R1 groups are derived from glycoses and are of the formula:

-CH2-(CHOH)4-CH2OH formula II

, for instance, corresponding to residues from monosaccharides such as glucose, mannose or galactose, preferably glucose. The aldehyde of the monosaccharide is typically eliminated during the reaction to bind the monosaccharide to the amine of formula I. It is specially preferred when R1 is derived from glucose. In this case the group —NR1 is of the formula:

-N-CH2 (CHOH)4 CH2OH formula III

and the group is conveniently called a glycamine group. Most preferably the group R1 will be derived from glucose and the corresponding amines may be called glucamines (as they will usually be made from glucose). The group R1 may comprise, one, two or more glucose units, and the resulting glucamine may be a mixture of monoglucamine (R1 comprises one glucose unit), diglucamine (R1 comprises two glucose units) and triglucamine (R1 comprises three glucose units).

When R1 is a C1 to C10 alkyl, it is preferably an alkyl comprising from 1 to 5, more preferably from 1 to 4, even more preferably from 1 to 2 carbon atoms. Most preferably when R1 is not a polyhydroxyhydrocarbyl, it is hydrogen or methyl. Most preferably R1 is a polyhydroxyhydrocarbyl.

R2 is preferably selected from the group consisting of hydrogen and C1 to C10 alkyl, particularly when R1 is a polyhydroxyhydrocarbyl. R2 is preferably hydrogen or an alkyl group comprising from 1 to 5, more preferably from 1 to 4 and even more preferably from 1 to 2 carbon atoms. Most preferably R2 is hydrogen or methyl.

When R1 is not a polyhydroxyhydrocarbyl, R1 and R2 are preferably independently selected from hydrogen or an alkyl group comprising from 1 to 5 preferably from 1 to 4 and even more preferably from 1 to 2 carbon atoms. Most preferably R1 and R2 are independently selected from hydrogen or methyl.

R3 is a hydrocarbyl, preferably selected from C6 to C30 alkyl, hydroxyalkyl, alkoxyalkyl, cycloalkyl, aralkyl or alkenyl groups, preferably the alkyl group comprises from 6 to 30, preferably from 7 to 20, more preferably from 8 to 15, even more preferably from 8 to 14. The alkyl group can be linear or branched, preferably C1 to C4 branching, more preferably C1 to C3 branching on the 2- or 3-position, preferably 2-position. R3 can also be a substituted alkyl group e.g. a hydroxy or alkoxy substituted alkyl group, particularly a C6 to C30 alkyl group which is hydroxy substituted. The additional hydroxyl group or oxygen atom may provide a modest increase in water solubility. R3 can also be an aralkyl group, particularly a C7 to C12 aralkyl group, such as a benzyl group. R3 is preferably selected from the group consisting of: C6 to C14 alkyl and mixtures thereof, preferably R3 is selected from the group consisting of hexyl, octyl, decyl, docecyl, tetradecyl, and mixtures thereof.

The amine surfactant selected from amine compounds according to formula (I) can have the formula wherein:
R1 is a polyhydroxyhydrocarbyl which is preferably derived from a monosaccharide, more preferably glucose, and has the formula:

   -CH2 (CHOH)4 CH2OH formula II;
R2 is hydrogen or methyl; and
R3 is selected from the group consisting of: C6 to C10 alkyl and mixtures thereof, preferably R3 is selected from the group consisting of hexyl, octyl, decyl, and mixtures thereof, more preferably R3 is decyl, most preferably R3 is 2-propylheptyl.

Preferred amines for use herein include those in which n is 1, R1 is glucose as such forming a glucamine compound, R2 is methyl and R3 is hexyl, octyl or decyl.

When R3 is octyl, it is preferably selected from n-octyl, and 2-ethylhexyl. When R3 is decyl, it is preferably selected from n-decyl and 2-propylheptyl.

Other preferred amines for use herein are those in which n is 1, R1 and R2 are methyl and R3 is hexyl, octyl or decyl. When R3 is octyl, it is preferably selected from n-octyl and 2-ethylhexyl. When R3 is decyl, it is preferably selected from n-decyl and 2-propylheptyl.

Mixtures of different amines can have benefits in terms of processing, solubility and performance.

While such amine surfactants can have a net positive charge at certain pH, they are typically referred to as non-ionic surfactants. However, at low pH (below the pKa of the surfactant) they can have a net positive charge.

These surfactants are described in EP16184415 and US20190055496.

### Amine Oxide surfactants

The composition of the invention preferably comprises from 0.05 to 5%, more preferably from 0.1 to 2% and more preferably from 0.2 to 1% by weight of the composition of amine oxide surfactant.

Suitable amine oxide surfactants include: R1R2R3NO wherein each of Rl, R2 and R3 is independently a saturated or unsaturated, substituted or unsubstituted, linear or branched hydrocarbon chain having from 1 to 30 carbon atoms. Preferred amine oxide surfactants are amine oxides having the following formula: R1R2R3NO wherein R1 is a hydrocarbon chain comprising from 1 to 30 carbon atoms, preferably from 6 to 20, more preferably from 8 to 16 and wherein R2 and R3 are independently saturated or unsaturated, substituted or unsubstituted, linear or branched hydrocarbon chains comprising from 1 to 4 carbon atoms, preferably from 1 to 3 carbon atoms, and more preferably are methyl groups. R1 may be a saturated or unsaturated, substituted or unsubstituted linear or branched hydrocarbon chain.

Highly preferred amine oxides are C8 dimethyl amine oxide, C10 dimethyl amine oxide, C12 dimethyl amine oxide, , C14 dimethyl amine oxide, and mixtures thereof C8 dimethyl amine oxide is commercially available under the trade name Genaminox^{®} OC from Clariant; C10 dimethyl amine oxide is commercially available under the trade name Genaminox^{®} K-10 from Clariant; C12 dimethyl amine oxide is commercially available under the trade name Genaminox^{®} LA from Clariant and of Empigen OB from Huntsman; C14 amine oxide is commercially available under the trade name of Empigen OH 25 from Huntsman. Other suitable amine oxide surfactants are cocoyldiethoxy amine oxide available under the trade name of Genaminox CHE from Clariant, and cocamydopropyl amine oxide commercially available under the trade name of Empigen OS/A from Huntsman. Particularly preferred amine oxide surfactants are C10 dimethyl amine oxide such as Genaminox K-10. Amine oxide surfactants are the provide good cleaning properties and good shine.

### Zwitterionic and amphoteric surfactants

The hard surface cleaning composition may comprise an amphoteric surfactant, a zwitterionic surfactant, and mixtures thereof. Suitable zwitterionic surfactants typically contain both cationic and anionic groups in substantially equivalent proportions so as to be electrically neutral at the pH of use, and are well known in the art. Some common examples of zwitterionic surfactants are described in US. Pat. Nos. 2,082,275, 2,702,279 and 2,255,082.

Suitable zwitteronic surfactants include betaines such alkyl betaines, alkylamidobetaine, amidazoliniumbetaine, sulfobetaine (INCI Sultaines) as well as the phosphobetaine.

Suitable betaines are the alkyl betaines of the formula (Ia), the alkyl amido betaine of the formula (Ib), the sulfo betaines of the formula (Ic) and the amido sulfobetaine of the formula (Id);

R1-N+(CH3)2-CH2COO- (Ia)

R1-CO-NH(CH2)3-N+(CH3)2-CH2COO- (Ib)

R1-N+(CH3)2-CH2CH(OH)CH2SO3- (Ic)

R1-CO-NH-(CH2)3-N+(CH3)2-CH2CH(OH)CH2SO3- (Id)

in which R1 is a saturated or unsaturated C6-C22 alkyl residue, preferably C8-C18 alkyl residue. Particularly preferred are betaines of the formula Ia such as for example N-alkyl-N-dimethyl betaine like the one sold under the trade name of Empigen BB by Huntsman.

Examples of suitable betaines and sulfobetaine are the following designated in accordance with [INCI]: Almondamidopropyl of betaines, Apricotamidopropyl betaines, Avocadamidopropyl of betaines, Babassuamidopropyl of betaines, Behenamidopropyl betaines, Behenyl of betaines, betaines, Canolamidopropyl betaines, Capryl/Capramidopropyl betaines, Carnitine, Cetyl of betaines, Cocamidoethyl of betaines, Cocamidopropyl betaines, Cocamidopropyl Hydroxysultaine, Coco betaines, Coco Hydroxysultaine, Coco/Oleamidopropyl betaines, Coco Sultaine, Decyl of betaines, Dihydroxyethyl Oleyl Glycinate, Dihydroxyethyl Soy Glycinate, Dihydroxyethyl Stearyl Glycinate, Dihydroxyethyl Tallow Glycinate, Dimethicone Propyl of PG-betaines, Erucamidopropyl Hydroxysultaine, Hydrogenated Tallow of betaines, Isostearam idopropyl betaines, Lauramidopropyl betaines, Lauryl of betaines, Lauryl Hydroxysultaine, Lauryl Sultaine, MiIkamidopropyl betaines, Minkamidopropyl of betaines, Myristamidopropyl betaines, Myristyl of betaines, Oleamidopropyl betaines, Oleamidopropyl Hydroxysultaine, Oleyl of betaines, Olivamidopropyl of betaines, Palmam idopropyl betaines, Palm itam idopropyl betaines, Palmitoyl Carnitine, Palm Kernelamidopropyl betaines, Polytetrafluoroethylene Acetoxypropyl of betaines, Ricinoleamidopropyl betaines, Sesam idopropyl betaines, Soyamidopropyl betaines, Stearamidopropyl betaines, Stearyl of betaines, Tallowamidopropyl betaines, Tallowamidopropyl Hydroxysultaine, Tallow of betaines, Tallow Dihydroxyethyl of betaines, Undecylenamidopropyl betaines and Wheat Germamidopropyl betaines.

If the composition comprises a zwitterionic surfactant, it is preferably a betaine of the formula Ia such as for example N-alkyl-N-dimethyl betaine like the one sold under the trade name of Empigen BB by Huntsman.alkyl dimethyl betaine.

Amphoteric surfactants can be either cationic or anionic depending upon the pH of the composition. Suitable amphoteric surfactants include dodecylbeta-alanine, N-alkyltaurines such as the one prepared by reacting dodecylamine with sodium isethionate, as taught in US. Pat. No. 2,658,072, N-higher alkylaspartic acids such as those taught in U.S. Pat. No. 2,438,091. Other suitable amphoteric surfactants are the products sold under the trade name Miranol by Solvay-Novecare such as, for example, sodium lauroamphoacetate (Miranol Ultra L-32E), sodium stearoampho acetate (Miranol DM), disodium cocoamphodiacetate (Miranol C2m Conc NP), disodium lauroamphodiacetate (Miranol BM Conc), disodium capryloampho dipropionate (Miranol JBS), sodium mixed C8 amphocarboxylate (Miranol JEM Conc), and sodium capryloampho hydroxypropyl sulfonate (Miranol JS). Other non-limiting examples of suitable amphoteric surfactants are disodium capryloamphodiacetate (Mackam 2CY 75-Solvay Novecare), octyliminodipropionate (Ampholak YJH40-Akzo Nobel), sodium lauriminodipropionate (Mirataine H2C-HA-Solvay Novecare), and sodium lauroamphohydroxypropylsulfonate (Mackam LS- Solvay Novecare).

Other suitable additional surfactants can be found in McCutcheon's Detergents and Emulsifers, North American Ed. 1980.

### Alkyl pyrrolidone surfactants:

Pyrrolidone-based surfactants, including alkyl pyrrolidones, are well known and their use and methods of making them have been extensively reviewed (for instance in Pyrrolidone-based surfactants (a literature review), Login, R.B. J Am Oil Chem Soc (1995) 72: 759-771).

Suitable alkyl pyrrolidones can have the formula: 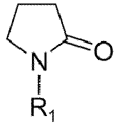 wherein:
R1 is C6-C20 alkyl, or R2NHCOR3, and R2 is C1-C6 alkyl and R3 is C6-C20 alkyl. R1 is preferably C6-C20 alkyl. Suitable alkylpyrrolidones include N-alkyl-2-pyrrolidones, wherein the alkyl chain is C6 to C20, or C6 to C10, or C8.

Suitable alkyl pyrrolidones are marketed under the tradename Surfadone^{®} by the Ashland Inc., such as Surfadone LP-100 (N-octly-2-pyrrolidone) and LP-300 (N-docedycl-2-pyrrolidone) and is also available from BASF.

### Anionic surfactants

If anionic surfactant is present, it is preferably present at low levels. The anionic surfactant can be selected from the group consisting of: an alkyl sulphate, an alkyl alkoxylate sulphate, a sulphonic acid or sulphonate surfactant, polycarboxylated anionic surfactants and mixtures thereof. The antimicrobial hard surface cleaning composition can comprise up to 2.0 wt%, preferably up to 1.0 wt%, or up to 0.1 wt% of anionic surfactant. In most preferred embodiments, the composition is essentially free, of anionic surfactant.

Suitable polycarboxylated anionic surfactants can be selected from the group consisting of: polyalkoxylate polycarboxylated surfactants, and mixtures thereof.

Suitable polycarboxylated anionic surfactants are described in US5376298, EP0129328, WO03018733, and US5120326.

Suitable polyalkoxylate polycarboxylated surfactant can have the empirical formula:

R-O-(CH(x)-CH(y)-O)n-R1

wherein:
R is a hydrophobic group, preferably a substituted, or unsubstituted, hydrocarbon group typically containing from 6 to 16 carbon atoms, preferably from 8 to 14 carbon atoms, x and y are each independently selected from the group consisting of hydrogen, methyl, and succinic acid radicals, with the proviso that at least one x or y moiety per molecule is a succinic acid radical, wherein n is between 1 and 60, and wherein R1 is hydrogen, substituted hydrocarbon, unsubstituted hydrocarbon preferably having between 1 and 8 carbon atoms, sulfuric, or sulfonic radical, with any acid groups being neutralized by compatible cationic groups, e.g., sodium, potassium, alkanolammonium, magnesium, etc.

Suitable polyalkoxylate polycarboxylates surfactant can have the empirical formula:

R-O-(C2H4O)x-[CH(L)CH(L)]y-[CH2CH(CH3)O)zQ

wherein:
R is a hydrocarbon hydrophobic group, preferably alkyl, containing from 6 to 16, preferably from 8 to 14 carbon atoms; x is a number from 0 to 60, preferably from 4 to 50, more preferably from 6 to 50; L is either a CI-3 alkyl group or a group having the formula -CH-(COO-)CH2(COO-), with at least one L group in each molecule being -CH(COO-)CH2(COO-); y is a number from 1 to 12, preferably from 2 to 10, more preferably from 3 to 8; z is a number from 0 to 20, preferably from 0 to 15, more preferably from 0 to 10; and Q is selected from the group consisting of H and sulfonate groups, the compound being rendered electrically neutral by the presence of cationic groups, preferably selected from the group consisting of sodium, potassium, and substituted ammonium, e.g., monoethanol ammonium, cations. Specific examples of such polyalkoxylate polycarboxylate surfactant include the following: Poly-Tergent^{®} C9-51B (CS-l) (x=12; y=8; and Z= 17); Poly-Tergent ^{®} C9-62P (x=4; y=3; and z= 17); Poly-Tergent ^{®} C9-74P (x=10; y=3.5; and Z=3 5.); and Poly-Tergent ^{®} C9-92 (x=approximately 55; y=6.5; and z=0). R is believed to be an alkyl group such as a linear C9 alkyl group, and Q is believed to be H. The Poly-Tergent^{®} surfactants are now sold under the Plurafac^{®} trade name by BASF.

Suitable polycarboxylated anionic surfactants include alkoxylate polymer, alkyl ether, alkenedioic acid salts, for instance, as sold those under the Plurafac CS-10 tradename by BASF.

Suitable alkyl sulphates for use herein include water-soluble salts or acids of the formula ROSO3M wherein R is a C6-C18 linear or branched, saturated or unsaturated alkyl group, preferably a C8-C16 alkyl group and more preferably a C10-C16 alkyl group, and M is H or a cation, e.g., an alkali metal cation (e.g., sodium, potassium, lithium), or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Particularly suitable linear alkyl sulphates include C12-14 alkyl sulphate like EMPICOL^{®} 0298/, EMPICOL^{®} 0298/F or EMPICOL^{®} XLB commercially available from Huntsman. By "linear alkyl sulphate" it is meant herein a non-substituted alkyl sulphate wherein the linear alkyl chain comprises from 6 to 16 carbon atoms, preferably from 8 to 14 carbon atoms, and more preferably from 10 to 14 carbon atoms, and wherein this alkyl chain is sulphated at one terminus. Suitable sulphonated anionic surfactants for use herein are all those commonly known by those skilled in the art. Preferably, the sulphonated anionic surfactants for use herein are selected from the group consisting of: alkyl sulphonates; alkyl aryl sulphonates; naphthalene sulphonates; alkyl alkoxylate sulphonates; and C6-C16 alkyl alkoxylate linear or branched diphenyl oxide disulphonates; and mixtures thereof.

Suitable alkyl sulphonates for use herein include water-soluble salts or acids of the formula RSO3M wherein R is a C6-C18 linear or branched, saturated or unsaturated alkyl group, preferably a C8-C16 alkyl group and more preferably a C10-C16 alkyl group, and M is H or a cation, e.g., an alkali metal cation (e.g., sodium, potassium, lithium), or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Suitable alkyl aryl sulphonates for use herein include water-soluble salts or acids of the formula RSO3M wherein R is an aryl, preferably a benzyl, substituted by a C6-C18 linear or branched saturated or unsaturated alkyl group, preferably a C8-C16 alkyl group and more preferably a C10-C16 alkyl group, and M is H or a cation, e.g., an alkali metal cation (e.g., sodium, potassium, lithium, calcium, magnesium and the like) or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Particularly suitable linear alkyl sulphonates include C12-C16 paraffin sulphonate like Hostapur ^{®} SAS commercially available from Clariant. Particularly preferred alkyl aryl sulphonates are alkyl benzene sulphonates commercially available under trade name Nansa□ available from Huntsman.

By "linear alkyl sulphonate" it is meant herein a non-substituted alkyl sulphonate wherein the alkyl chain comprises from 6 to 18 carbon atoms, preferably from 8 to 16 carbon atoms, and more preferably from 10 to 16 carbon atoms, and wherein this alkyl chain is sulphonated at one terminus.

Suitable alkoxylate sulphonate surfactants for use herein are according to the formula R(A)mSO3M, wherein R is an unsubstituted C6-C18 alkyl, hydroxyalkyl or alkyl aryl group, having a linear or branched C6-C18 alkyl component, preferably a C8-C16 alkyl or hydroxyalkyl, more preferably C12-C16 alkyl or hydroxyalkyl, and A is an ethoxy or propoxy or butoxy unit, and m is greater than zero, typically between 0.5 and 6, more preferably between 0.5 and 3, and M is H or a cation which can be, for example, a metal cation (e.g., sodium, potassium, lithium, calcium, magnesium, etc.), ammonium or substituted-ammonium cation. Alkyl ethoxylated sulphonates, alkyl butoxylated sulphonates as well as alkyl propoxylated sulphonates are contemplated herein. Specific examples of substituted ammonium cations include methyl-, dimethyl-, trimethyl-ammonium and quaternary ammonium cations, such as tetramethyl-ammonium, dimethyl piperdinium and cations derived from alkanolamines such as ethylamine, diethylamine, triethylamine, mixtures thereof, and the like.

Exemplary surfactants are C12-C18 alkyl polyethoxylate (1.0) sulphonate (C12-C18E(1.0)SM), C12-C18 alkyl polyethoxylate (2.25) sulphonate (C12-C18E(2.25)SM), C12-C18 alkyl polyethoxylate (3.0) sulphonate (C12-C18E(3.0)SM), and C12-C18 alkyl polyethoxylate (4.0) sulphonate (C12-C18E(4.0)SM), wherein M is conveniently selected from sodium and potassium. Particularly suitable alkoxylate sulphonates include alkyl aryl polyether sulphonates like Triton X-200^{®} commercially available from Dow Chemical.

Preferably said sulphated or sulphonated anionic surfactant for use herein is selected from the group consisting of alkyl sulphates (AS) preferably C12, C13, C14 and C15 AS, sodium linear alkyl sulphonate (NaLAS), sodium paraffin sulphonate NaPC12-16S, and mixtures thereof. Most preferably sulphated or sulphonated anionic surfactant for use herein is selected from the group consisting of alkyl sulphates (AS) preferably, C12, C13, C14 and C15 AS, sodium linear alkyl sulphonate (NaLAS), sodium paraffin sulphonate NaPC12-16S and mixtures thereof.

Particularly preferred surfactants for use herein include non-ionic surfactants, in particular branched alcohol alkoxylates, more in particular 2-ethyl hexan-1-ol ethoxylated to a degree of from 4 to 6, and propoxylated to a degree of from 4 to 6, more preferably, the alcohol is first propoxylated and then ethoxylated, and 2-alkyl-1-alkanols such as alkoxylate C10 guerbet alcohols with 1 to 14, preferably 2 to 8, more preferably 3 to 6 ethoxylate or ethoxylate-propoxylate units. Other particularly preferred non-ionic surfactants include linear alcohol alkoxylate non-ionic surfactants with C8, C10, C12, mixtures of C8 to C10, mixtures of C10 to C12, mixtures of C9 to C11 linear alkyl chain and 8 or less ethoxylate units, preferably 3 to 8 ethoxylate units. Most preferably the alkoxylate non-ionic surfactant is selected from the group consisting of: 2-propylheptyl EO8 (Lutensol XL89-BASF); 2-propylheptyl EO5 (Lutensol XL50-BASF); C10 alcohol EO5 (Lutensol ON 50-BASF); C10 alcohol EO7 (Lutensol ON 70-BASF); C8-C10 alcohol EO5 (Novel 810 FD5 Sasol); C10 alcohol EO4 (Novel 10-4 Sasol); and 2-ethyl-hexanol PO5EO6 (Ecosurf EH6-Dow).

Other particularly preferred surfactants for use here in include linear amine oxide surfactants, in particular C8-C12 dimethyl amine oxide, more in particular C10 dimethyl amine oxide; alkyldimethylbetaine surfactants, more in particular N,N-Dimethyl-N-dodecylglycine betaine (Empigen BB-Huntsman); alkyl glucamide surfactants such as N-alkyl-N-acylglucamide preferably N-decanoyl-N-methylglucamine, and the alkyl glucamide surfactants sold under the name of GlucoPure^{®}, GlucoTain^{®}, and GlucoWet^{®} by Clariant; alkylpolyglucoside surfactants, more in particular C8 to C12 alkyl polyglucosides, more preferably C8 to C10 alkyl polyglucosides such as for example Triton CG50 (Dow).

### pH adjusting agents

Depending on the targeted uses, a composition of the present invention for home care use may need appropriate pH conditions. For example, if the composition is used in the kitchen area, a high pH product may be desired in order to effectively remove grease soils commonly found in the area. If the composition is used in a bathroom area, soap scum and hard water deposits may be the primary concern. In such cases, a low pH product may be more appropriate. There is no limitation on the types of pH adjusting agents that can be added into the liquid composition of the present invention. Example of pH adjusting agents that can be used include, but are not limited to, triethanolamine, diethanolamine, monoethanolamine, sodium hydroxide, sodium carbonate, ammonium hydroxide, potassium hydroxide, potassium carbonate, calcium carbonate, citric acid, acetic acid, hydrochloric acid, sulfamic acid, sulfuric acid and the like. Preferably, alkaline compositions comprise from 0.1 to 2% of alkanol amine, more preferably monoethanolamine. Preferably, acid compositions comprise from 0.1 to 5% of an organic acid, preferably citric acid. Ammonium hydroxide is also preferred. It provides good shine.

Other than components mentioned above, additional functional components may be included in the composition of the present invention. Additional components include, but are not limited to, chelants, compatibilizers, coupling agents, corrosion inhibitors, rheology modifiers, fragrances, colorants, preservatives, UV stabilizers, optical brighteners, and active ingredient indicators.

Preferred compositions herein include compositions comprising:
i) from about 0.05% to about 2% by weight of the quaternary ammonium compound, preferably a mixture of N-alkyl dimethyl benzyl ammonium chloride, N-octyl decyl dimethyl ammonium chloride, di-n-decyl dimethyl ammonium chloride, and di-n-dioctyl dimethyl ammonium chloride;
ii) from about 0.1% to about 2% by weight of the composition of the polymer;
iii) from about 0.05% to about 2% by weight of the composition of a surfactant selected from the group consisting of an amine oxide surfactant, a non-ionic surfactant and mixtures thereof, preferably the composition comprises an amine oxide surfactant;
iv) from about 0.2% to about 3% by weight of the composition of an alkalinity source, preferably monoethanolamine; and
v) at least 80%, preferably at least 85% by weight of the composition of water.

Preferred compositions herein include compositions comprising:
i) from about 0.05% to about 2% by weight of the quaternary ammonium compound, preferably a mixture of N-alkyl dimethyl benzyl ammonium chloride, N-octyl decyl dimethyl ammonium chloride, di-n-decyl dimethyl ammonium chloride, and di-n-dioctyl dimethyl ammonium chloride;
ii) from about 0.1% to about 2% by weight of the composition of the polymer;
iii) from about 0.05% to about 1% by weight of the composition of a non-ionic surfactant, preferably an alcohol ethoxylate;
iv) from about 0.2% to about 3% by weight of the composition of an alkalinity source, preferably an alkanolamine; and
v) at least 80%, preferably at least 90% by weight of the composition of water.

Preferred compositions herein include compositions comprising:
i) from about 0.05% to about 2% by weight of the composition of the quaternary ammonium compound, preferably a mixture of N-alkyl dimethyl benzyl ammonium chloride, N-octyl decyl dimethyl ammonium chloride, di-n-decyl dimethyl ammonium chloride, and di-n-dioctyl dimethyl ammonium chloride;
ii) from about 0.1% to about 2% by weight of the composition of the polymer;
iii) from about 0.05% to about 5% by weight of the composition of a non-ionic surfactant, preferably an alcohol ethoxylate;
iv) from about 0.2% to about 3% by weight of the composition of an acid, preferably citric acid; and
v) at least 80%, preferably at least 85% by weight of the composition of water. Other preferred compositions herein include compositions comprising:
   i) from about 0.05% to about 2% by weight of the composition of the quaternary ammonium compound, preferably a mixture of N-alkyl dimethyl benzyl ammonium chloride, N-octyl decyl dimethyl ammonium chloride, di-n-decyl dimethyl ammonium chloride, and di-n-dioctyl dimethyl ammonium chloride;
   ii) from about 0.5% to about 1.50% by weight of the composition of the polymer; and
   iii) from about 0.25% to 1% by weight of the composition of a surfactant selected from the group consisting of an amine oxide surfactant, a non-ionic surfactant and mixtures thereof, preferably the composition comprises an amine oxide surfactant.
   iv) at least 80%, preferably at least 85% by weight of the composition of water.

Preferred compositions herein include compositions comprising:
i) from about 0.25% to about 1% by weight of the composition of the nitrogen containing biocidal compound, preferably a quaternary ammonium compound, preferably a mixture of N-alkyl dimethyl benzyl ammonium chloride, N-octyl decyl dimethyl ammonium chloride, di-n-decyl dimethyl ammonium chloride, and di-n-dioctyl dimethyl ammonium chloride;
ii) from about 0.1% to about 4% by weight of the composition of the polymer;
iii) from about 0.25% to about 1.25% by weight of the composition of a surfactant selected from the group consisting of an amine oxide surfactant, a non-ionic surfactant and mixtures thereof, preferably the composition comprises an amine oxide surfactant.
iv) at least 80%, preferably at least 85% by weight of the composition of water. Preferably, the compositions of the invention comprise from 0.02% to 0.5% by weight of the composition of perfume.

### EXAMPLES

### Example 1:

Tables 1 to 4 show hard surface antimicrobial cleaning compositions according to the invention (Compositions A to Z). Compositions 1 and 2 in Table 1 are comparative compositions. Composition 1 is free of polymer and Composition 2 comprises a polymer outside the scope of the claims. The ingredients are expressed as active weight percentage of the total composition. The compositions according to the invention are all stable. The shine provided by the compositions is graded on black tiles after product application and wiping. Panellists visually assess the streaking appearance of the dried tile according to the following scale; 0 = No streaks, 1 = Very slight streaks, 2 = Slight streaks, 3 = Slight to moderate streaks, 4 = Moderate streaks, 5 = Moderate to heavy streaks, 6 = Heavy streaks.

| | **Table 1** | | | | | | | | |
|---|---|---|---|---|---|---|---|---|---|
| | | **1** | **2** | **A** | **B** | **C** | **D** | **E** | **F** |
| n-Alkyl Dimethyl Benzyl Ammonium Chloride | | 0.2 | 0.2 | 0.2 | 0.2 | 0.2 | 0.2 | 0.04 | 0.3 |
| Di-n-Octyl Dimethyl Ammonium Chloride | | 0.075 | 0.075 | 0.075 | 0.075 | 0.075 | 0.075 | 0.015 | 0.113 |
| n-Octyl Decyl Dimethyl Ammonium Chloride | | 0.15 | 0.15 | 0.15 | 0.15 | 0.15 | 0.15 | 0.3 | 0.225 |
| Di-n-Decyl Dimethyl | | 0.075 | 0.075 | 0.075 | 0.075 | 0.075 | 0.075 | 0.015 | 0.113 |
| Ammonium Chloride | | | | | | | | | |
| Decyl dimethyl amine oxide | 0.75 | 0.75 | 0.75 | 0.75 | 0.75 | 0.20 | 0.75 | 0.75 | |
| Monoethanolamine | 0.5 | 0.5 | 0.5 | 0.5 | 0.5 | 0.5 | 0.5 | 0.5 | |
| Maleic acid-methyl vinyl ether copolymer, MW~ 150,000 | 0.00 | 0.00 | 1.25 | 0.65 | 1.50 | 1.25 | 1.25 | 1.25 | |
| Maleic acid monoethyl ester-methyl vinyl ether copolymer, MW~ 130,000 | 0 | 1.25 | 0 | 0 | 0 | 0 | 0 | 0 | |
| Fragrance | 0.1 | 0.1 | 0.1 | 0.1 | 0.1 | 0.1 | 0.1 | 0.1 | |
| Water | Bal | Bal | Bal | Bal | Bal | Bal | Bal | Bal | |
| pH | >10 | | >7 | >9 | >6 | >7 | >7 | >7 | |
| Phase | Separate d | Single | Single | Single | Single | Single | Single | Single | |
| Shine | 5-6 | 5-6 | 1-2 | 5-6 | 3-4 | 1-2 | 1-2 | 3-4 | |

| | | | | | | |
|---|---|---|---|---|---|---|
| **Table 2** | | | | | | |

| | **G** | **H** | **I** | **J** | **K** | **L** |
|---|---|---|---|---|---|---|
| n-Alkyl Dimethyl Benzyl Ammonium Chloride | 0.2 | 0.2 | 0.2 | 0.2 | 0.2 | 0.2 |
| Di-n-Octyl Dimethyl Ammonium Chloride | 0.075 | 0.075 | 0.075 | 0.075 | 0.075 | 0.075 |
| n-Octyl Decyl Dimethyl Ammonium Chloride | 0.15 | 0.15 | 0.15 | 0.15 | 0.15 | 0.15 |
| Di-n-Decyl Dimethyl Ammonium Chloride | 0.075 | 0.075 | 0.075 | 0.075 | 0.075 | 0.075 |
| Decyl dimethyl amine oxide | 0.50 | 0.75 | 0.75 | 0.50 | 0.5 | 1.5 |
| Ammonium hydroxide | 0.05 | 0.1 | 0.1 | 0.0 | 0.0 | 0.0 |
| Monoethanolamine | 0.5 | 0.5 | 0.5 | 0.5 | 0.5 | 0.5 |
| Maleic acid-methyl vinyl ether copolymer, MW~ 150,000 | 1.25 | 1.25 | 0.0 | 0.0 | 0.0 | 0.0 |
| Maleic acid-methyl vinyl ether copolymer, MW~ 700,000 | 0.0 | 0.0 | 1.20 | 0.85 | 1.25 | 1.00 |
| Fragrance | 0.1 | 0.1 | 0.1 | 0.1 | 0.1 | 0.1 |
| Water | Bal | Bal | Bal | Bal | Bal | Bal |
| pH | >8 | >9 | >9 | >8 | >6 | >7 |
| Phase | Single | Single | Single | Single | Single | Single |
| Shine | 1-2 | 1-2 | 1-2 | 1-2 | 3-4 | 3-4 |

| | | | | | | | | |
|---|---|---|---|---|---|---|---|---|
| **Table 3** | | | | | | | | |

| | **M** | **N** | **O** | **P** | **Q** | **R** | **S** | **T** |
|---|---|---|---|---|---|---|---|---|
| n-Alkyl Dimethyl Benzyl Ammonium Chloride | 0.04 | 0.36 | 0.2 | 0.2 | 0.04 | 0.2 | 0.2 | 0.2 |
| Di-n-Octyl Dimethyl Ammonium Chloride | 0.015 | 0.135 | 0.075 | 0.075 | 0.015 | 0.075 | 0.075 | 0.075 |
| n-Octyl Decyl Dimethyl Ammonium Chloride | 0.3 | 0.27 | 0.15 | 0.15 | 0.3 | 0.15 | 0.15 | 0.15 |
| Di-n-Decyl Dimethyl Ammonium Chloride | 0.015 | 0.135 | 0.075 | 0.075 | 0.015 | 0.075 | 0.075 | 0.075 |
| Decyl dimethyl amine oxide | 0.50 | 0.50 | 0.50 | 0.50 | 0.50 | 0.50 | 1.50 | 0.5 |
| Monoethanolamine | 0.50 | 0.50 | 0.50 | 0.50 | 0.50 | 0.50 | 0.50 | 0.50 |
| Maleic acid-methyl vinyl ether copolymer, MW~ 700,000 | 1.00 | 1.00 | 0.00 | 0.00 | 0.00 | 0.00 | 0.00 | 0.00 |
| Maleic acid-methyl vinyl ether copolymer, MW~ 120,000 | 0.00 | 0.00 | 0.85 | 1.25 | 0.85 | 0.00 | 0.00 | 0.00 |
| Maleic acid-methyl vinyl ether copolymer, MW~ 150,000 | 0.00 | 0.00 | 0.00 | 0.00 | 0.00 | 1.25 | 0.85 | 0.85 |
| Fragrance | 0.1 | 0.1 | 0.1 | 0.1 | 0.1 | 0.1 | 0.1 | 0.1 |
| Water | Bal | Bal | Bal | Bal | Bal | Bal | Bal | Bal |
| pH | >8 | >7 | >8 | >7 | >8 | >7 | >8 | >9 |
| Phase | Singl e | Singl e | Single | Single | Single | Single | Single | Single |
| Shine | 1-2 | 3-4 | 1-2 | 3-4 | 3-4 | 3-4 | 3-4 | 1-2 |

| | | | | | | |
|---|---|---|---|---|---|---|
| **Table 4** | | | | | | |

| | **U** | **V** | **W** | **X** | **Y** | **Z** |
|---|---|---|---|---|---|---|
| n-Alkyl Dimethyl Benzyl Ammonium Chloride | 0.2 | 0.2 | 0.2 | 0.2 | 0.2 | 0.2 |
| Di-n-Octyl Dimethyl Ammonium Chloride | 0.075 | 0.075 | 0.075 | 0.075 | 0.075 | 0.075 |
| n-Octyl Decyl Dimethyl Ammonium Chloride | 0.15 | 0.15 | 0.15 | 0.15 | 0.15 | 0.15 |
| Di-n-Decyl Dimethyl Ammonium Chloride | 0.075 | 0.075 | 0.075 | 0.075 | 0.075 | 0.075 |
| Dodecyl dimethyl amine oxide | 0.50 | 0.0 | 0.75 | 0.75 | 0.25 | 0.0 |
| Decyl dimethyl amine oxide | 0.0 | 0.0 | 0.75 | 0.0 | 0.75 | 0.50 |
| Octyl dimethyl amine oxide | 0.0 | 0.75 | 0.0 | 0.0 | 0.0 | 0.50 |
| Monoethanolamine | 0.5 | 0.5 | 0.5 | 0.5 | 0.5 | 0.5 |
| Maleic acid-methyl vinyl ether copolymer, MW~ 150,000 | 1.25 | 1.25 | 1.25 | 0.0 | 0.0 | 0.0 |
| Maleic acid-methyl vinyl ether copolymer, MW~ 120,000 | 0.0 | 0.0 | 0.0 | 0.85 | 0.85 | 0.85 |
| Fragrance | 0.1 | 0.1 | 0.1 | 0.1 | 0.1 | 0.1 |
| Water | Bal | Bal | Bal | Bal | Bal | Bal |
| pH | >7 | >7 | >7 | >8 | >9 | >8 |
| Phase | Single | Single | Single | Single | Single | Single |
| Shine | 1-2 | 1-2 | 1-2 | 3-4 | 3-4 | 3-4 |

Compositions A, H, I, K, O, R and T were tested for 24 hours residual self-sanitizing using a protocol based on EPA01-1A (24hr Residual Self-Sanitizing, 12 abrasion cycles) using *Enterobacter aerogenes* as the test organism and glass as the test surface. A pass result refers to at least 99.9% reduction (log 3) in bacteria at the end of the 12-abrasion regimen. Compositions A, H, I, K, O, R and T provide 24 hours residual self-sanitizing according to the above protocol based on EPA01-1A.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An aqueous antimicrobial cleaning composition comprising:
i) from about 0.05% to about 2% by weight of the composition of a quaternary ammonium biocidal compound;
ii) from about 0.1% to about 4% by weight of the composition of a polymer comprising a maleic acid-co-alkyl vinyl ether monomers;
iii) from about 0.05% to about 5% by weight of the composition of a surfactant;
iv) from about 0% to about 3% by weight of the composition of a pH adjusting agent; and
v) at least 80% by weight of the composition of water.

2. The composition according to claim 1 comprising from about 0.6 to about 1.5% by weight of the composition of the polymer.

3. The composition according to any of the preceding claims comprising from about 0.2% to about 2% by weight of the composition of the quaternary ammonium biocidal compound.

4. The composition according to any of the preceding claims wherein the surfactant is selected from the group consisting of an amine oxide surfactant, a non-ionic surfactant and mixtures thereof.

5. The composition according to any of the preceding claims wherein the surfactant comprises an amine oxide surfactant comprising C10 amine oxide.

6. The composition according to any of the preceding claims wherein the surfactant comprises a non-ionic surfactant comprising an alcohol alkoxylate.

7. The composition according to any of the preceding claims wherein the quaternary ammonium biocidal compound is a mixture comprising: from 30% to 50%, by weight of the mixture of N-alkyl dimethyl benzyl ammonium chloride, from 20% to 40% by weight of the mixture of N-octyl decyl dimethyl ammonium chloride, from 5% to 25% by weight of the mixture of din-decyl dimethyl ammonium chloride, and 5% to 25% by weight of the mixture of di-n-dioctyl dimethyl ammonium chloride.

8. The composition according to any of the preceding claims wherein the molecular weight of the polymer is from about 50000 Da to about 2000000 Da.

9. The composition according to any of the preceding claims wherein the composition has a pH of 7 or above as measured at 25°C.

10. The composition according to any of claims 1 to 8 wherein the composition comprises a non-ionic surfactant and has a pH of less than 7 as measured at 25°C.

11. The composition according to any of claims 1 to 9 comprising:
i) from about 0.2% to about 2% by weight of the composition of the quaternary ammonium biocidal compound;
ii) from about 0.1% to about 2% by weight of the composition of the polymer;
iii) from about 0.1% to about 2% by weight of the composition of an amine oxide surfactant; and
iv) from about 0.1% to about 3% by weight of the composition of a pH adjusting agent, preferably monoethanol amine and/or ammonium hydroxide.

12. The composition according to any of claims 1 to 8 or 10 comprising:
i) from about 0.2% to about 2% by weight of the composition of the quaternary ammonium biocidal compound;
ii) from about 0.1% to about 2% by weight of the composition of the polymer;
iii) from about 0.1% to about 4% by weight of the composition of a non-ionic surfactant;
iv) from about 0.1% to about 3% by weight of the composition of a pH adjusting agent, preferably citric acid.

13. A composition according to any of the preceding claims further comprising from 0.01 to 0.5% by weight of the composition of perfume.

14. A method to provide residual biocidal properties to a surface comprising the step of treating the surface with a composition according to any of the preceding claims.

15. Use of a composition according to any of claims 1 to 13 to provide residual biocidal properties to a surface.
